# EUROPEAN PATENT APPLICATION

(11) **EP 3 009 972 A1**
(43) Date of publication of application: **20.04.2016**
(21) Application number: 14306626.4
(22) Date of filing: 14.10.2014
(51) Int. Cl.: G06Q 20/08, G06Q 20/12, G06Q 20/32, G06Q 20/36, G06Q 20/38, G06Q 20/40, G06Q 20/42

(54) **A method for ensuring the genuine user has approved a payment transaction**

(71) Applicant: Gemalto SA, 92190 Meudon (FR)
(72) Inventor: Martin, Alain, 92190 Meudon (FR)
(74) Representative: Delaval, Guillaume Laurent

(57) **Abstract**

According to the invention, there is provided a method for ensuring that a genuine user has approved a payment transaction to be processed by a payment network, the method comprising the steps of : receiving (200) a signed request comprising a set of at least one parameter representative of the payment transaction and an electronic signature, said electronic signature being generated by a client application by applying a signing algorithm to the said at least one parameter following approval of the payment transaction by the user identified by said client application; verifying (201) that the received electronic signature has been generated by the genuine user; receiving (202) a consultation request emitted by the payment network requesting to check if the payment transaction has been approved by the genuine user; sending (203) a consultation response to the payment network indicating the result of the electronic signature verification.

## Description

### TECHNICAL FIELD

The present invention relates to a method for ensuring the genuine user has approved a payment transaction. In particular but not exclusively, the invention is applicable to on-line payment transactions.

### BACKGROUND OF THE INVENTION

Card-Not-Present on-line transaction, whether on computers or mobile devices, is open to fraud. Stolen card details can be used by a fraudster because no user authentication is required.

For example, wallets and other methods integrated at the payment gateway of a merchant currently do not prevent fraud because the fraudster will not use the wallet but continue to enter stolen card details in the available fields of the payment page.

Some methods exist to resolve this issue such as a state-of-the-art technique often designated dynamic card verification value (dCVV) which is based on the generation for each card-not-present transaction of a unique CVV value.

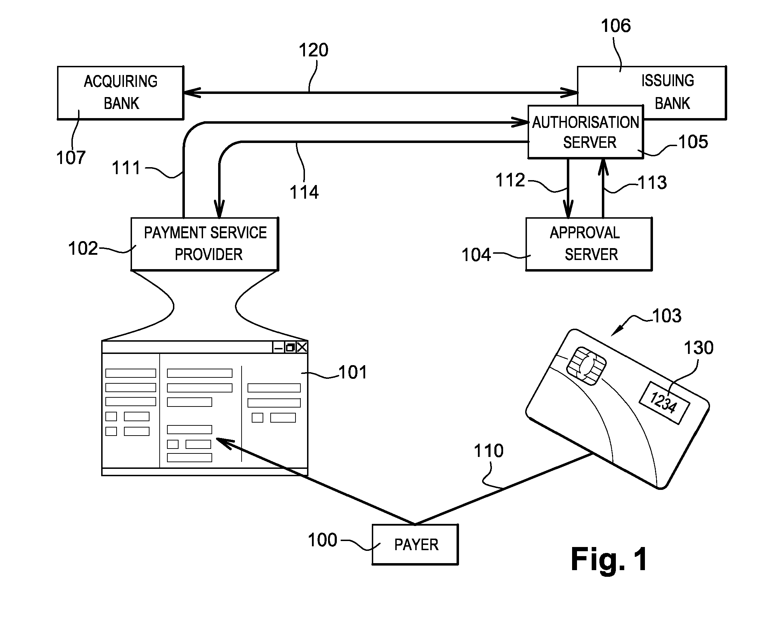

Figure 1 is an example of application of the dynamic CVV technique. In this example, a user 100 wants to buy a product proposed on the web site of an internet merchant. At the time of payment, a payment page 101 invites the user 100 to enter its payment credentials. The required payment credentials correspond for example to a primary account number (PAN) associated to a dCVV value. The dCVV value 130 can be generated by an algorithm implemented on a smartcard 103 attributed to the user 100 by an issuing bank 106. Once entered, a payment service provider 102 sends an authorization request 111 together with the payment credentials to an authorization server 105 handled by the issuing bank 106. Then, the authorization server 105 sends 112 the PAN and the dCVV to an approval server 104. This approval server memorizes a plurality of PAN numbers and is able to generate whenever required a dCVV value for each of them. For a given PAN number, a dCVV value generated by a smartcard and the corresponding dCVV generated by the approval server are matching. The approval server 104 checks that the dCVV transmitted with the authorization request 111 corresponds to the one generated by the approval server 104. A message 113 is then sent back to the authorization server 105 indicating the result of this comparison. If the two compared dCVV values are matching, the payment transaction is operated 120 with the acquiring bank 107 and confirmation message 114 is sent by the authorization server 105 to the payment service provider 102.

However these methods have limitations as they only apply to certain types of payment cards and do not apply to non card based on-line payments such as credit transfers or direct debits. There is a need to find an alternative technique allowing improving the security of payment transactions, for various payment instruments and in particular for card not present transactions.

### SUMMARY OF THE INVENTION

According to the invention, there is provided a method for ensuring that a genuine user has approved a payment transaction to be processed by a payment network, the method comprising the steps of :
- receiving a signed request comprising a set of at least one parameter representative of the payment transaction and an electronic signature, said electronic signature being generated by a client application by applying a signing algorithm to the said at least one parameter following approval of the payment transaction by the user identified by said client application;
- verifying that the received electronic signature has been generated by the genuine user;
- receiving a consultation request emitted by the payment network requesting to check if the payment transaction has been approved by the genuine user;
- sending a consultation response to the payment network indicating the result of the electronic signature verification.

In one embodiment, the client application is executed on a first device distinct from a second device on which a payment application proposing the transaction to the user is executed.

An internet payment window can be open, said window corresponding to predefined time duration during which the result of the signature verification is valid.

As an example, the payment transaction is approved by the user by providing a PIN code to the client application.

In one embodiment, an amount of the payment transaction is used as one parameter representative of the payment transaction.

In one embodiment, an identifier of a merchant proposing the transaction is used as one parameter representative of the payment transaction.

The signing algorithm can be chosen among: RSA, DSA SHA-1, SHA-256, SHA-512 or MD5 algorithms.

In one embodiment, the verification of the electronic signature is performed by recalculating the electronic signature once the signed request has been received by the approval server, by comparing the received electronic signature to the recalculated one, the received electronic signature being considered positively when these versions are matching.

According to the invention, there is also provided an approval server for ensuring that a genuine user has approved a payment transaction to be processed by a payment network, comprising:
- a module configured to receive a signed request comprising a set of at least one parameter representative of the payment transaction and an electronic signature, said electronic signature being generated by a client application by applying a signing algorithm to the said at least one parameter following approval of the payment transaction by the user identified by said client application;
- a module configured to verify that the received electronic signature has been generated by the genuine user;
- a module configured to receive a consultation request emitted by the payment network requesting to check if the payment transaction has been approved by the genuine user;
- a module configured to send a consultation response the payment network indicating the result of the electronic signature verification.

In one embodiment, the signed request comprises an identifier of the user.

In one embodiment, the approval server comprises a memory configured to store the results of the verification of the electronic signature.

In one embodiment, the approval server comprises a memory configured to store a plurality of electronic signatures, an electronic signature being associated to a given payment transaction, said electronic signatures being maintained in memory to be used after completion of the transaction as a proof that the genuine user approved the transaction.

In one embodiment, the approval server comprises a memory configured to store at least a payment credential associated to the identifier of the user, said payment credential being transmitted to a payment service provider once the electronic signature has been authenticated.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 is an example of application of the dynamic CVV technique;
- Figure 2 provides a simplified representation of a method for authorizing by an approval server a payment;
- Figure 3 gives an example of a system comprising an approval server according to the invention;
- Figure 4 provides the example of a memory area than can be monitored by an approval server according to the invention.

### DETAILED DESCRIPTION

In the following description, numerous specific details are set forth. However, it is understood that embodiments may be practiced without these specific details. In other instances, well known circuits, structures and techniques have not been shown in detail in order not to obscure the understanding of the description.

The method according to the invention allows a user authentication and user approval of a card-not-present on-line transaction. One of the advantages of the invention is that stolen payment credentials cannot be used anymore by an unauthorized user. In this description, the expression "card-not-present on-line transaction" refers to any kind of payment transaction operated on line and for which the payment card is not present, including online card-based payment, bank credit transfer and direct debit. The examples provided hereafter are mainly related to on-line card-based payment, but the skilled person will appreciate that the invention can be applied to any kind of on-line transaction for which an approval by a user of the corresponding service may be appropriate.

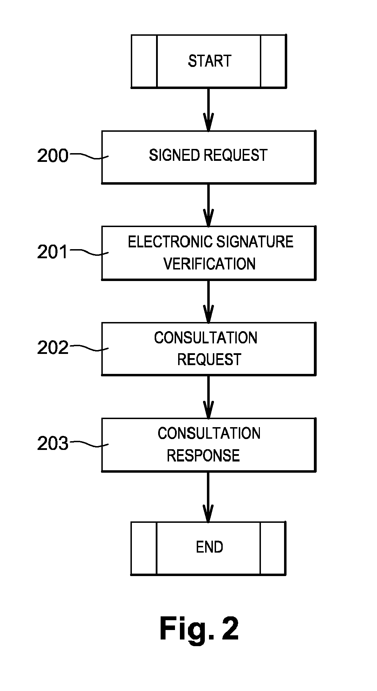

Figure 2 provides a simplified representation of a method for authorizing a payment transaction by an approval server.

The principle of the invention is that an approval server will be consulted to know if a requested transaction has been approved by a user. In this description, a user designates the client of a bank. This bank is called issuing bank in case of an on-line transaction, for example a bank which has provided the user with a payment card. The issuing bank's payment system, typically but not necessarily its authorisation server, will consult the approval server upon receipt of a transaction authorisation request originating from the merchant.

The user approval triggers the generation of a signed request based on a set of parameters representative of the transaction. This signed request can be generated by a client application embedded on a device such as a smartphone and/or by a secure element embedded in a device.

More precisely, the method according to the invention comprises a first step 200, wherein the approval server receives a signed request. A signed request comprises a set of at least one parameter representative of the requested transaction as well as an electronic signature.

The aforementioned set of parameters can be composed of at least one of the following parameters:
- the amount of the transaction;
- an identifier of the merchant proposing the transaction;
- an identifier of the product object of the transaction.

The generation of the electronic signature is triggered by the approval of the payment transaction by the user. One important aspect of the invention is that the transaction is approved by a user which has been previously identified, namely the genuine user.

As an example, the user can review the amount of the transaction and an identifier of the merchant which are displayed on a screen on a terminal. Then, if these are consistent with the requested transaction, the user can enter a personal identification code to approve the transaction. Other ways for the user to approve the transaction while being identified can also be considered in the scope of this invention such as a biometric identification system embedded on the user's terminal. For example, fingerprint or iris recognition can be implemented.

In order to generate the electronic signature, a signing algorithm is applied by client application to the at least one parameter of the set.

An electronic signature is a digest characterising a message with a low risk of error in view of a required integrity level. In the scope of this invention, said message corresponds to the first set of at least one parameter representative of the transaction.

The electronic signature may be obtained by using a checksum calculated from the message itself as the signing algorithm, for example parity or a CRC (Cyclic Redundancy Code).

Alternatively, the electronic signature may be of the cryptographic type, an image of the message obtained by using a signing algorithm such as MD5 (Message Digest 5), SHA-1 (Secure Hash Algorithm 1), SHA-256 (Secure Hash Algorithm 256) or SHA-512 (Secure Hash Algorithm 512).

The electronic signature may also be an authenticated digest, that is to say a cryptographic digest that takes account of a secret element, in addition to the data of which it is a check sum. For example, the authenticated digest may be of the HMAC type (keyed-Hash Message Authentication Code). That authenticated digest is calculated using a cryptographic hashing function in combination with a secret key.

RSA (Rivest Shamir Adleman) or DSA (Digital Signature Algorithm) may also be used as a signing algorithm to generate the electronic signature.

After the reception of the signed request, the approval server verifies, in a second step 201, that the received electronic signature has been generated by the genuine user. As an example, the approval server can recalculate the electronic signature based on the parameters of the first set which are transmitted with the request. The approval server stores the result of this verification, for example until it is consulted by the issuing bank's payment system.

The electronic signature may also be maintained in the approval server's memory to be used after completion of the transaction as it may constitute a verifiable proof that the genuine user approved and conducted the transaction.

In 202, the issuing bank's payment system receives an authorisation request from a payment network and consults the approval server.

In this description, a payment network refers to a telecommunication network that links bank accounts and allows monetary exchange using bank deposits.

This authorisation request contains the payment credentials of the user. These payment credentials may be a Primary Account Number (PAN), i.e. the payment card number or an International Bank Account Number (IBAN) or any other identifier of the payment instrument chosen by the bank.

When consulting the approval server, the authorisation server may send the transaction details including the payment credentials.

The approval server can search, using the payment credentials, if the user exists, and may then check if the transaction details match those approved by the user and then checks the result of the signature verification and responds 203 to the issuing bank's payment system with True or False. If the user had not approved the transaction, the response is False.

Then, the issuing bank's payment system uses the response in its authorisation decision. For example, if the approval server's response is False, then the issuing bank may decline the transaction. If the response is True, the issuing bank may process the authorisation request with other risk management methods that it has implemented before declining or authorising the transaction.

One advantage of this method is that the electronic signature is associated to a specific transaction approved by an identified user and cannot be used to authorize another transaction.

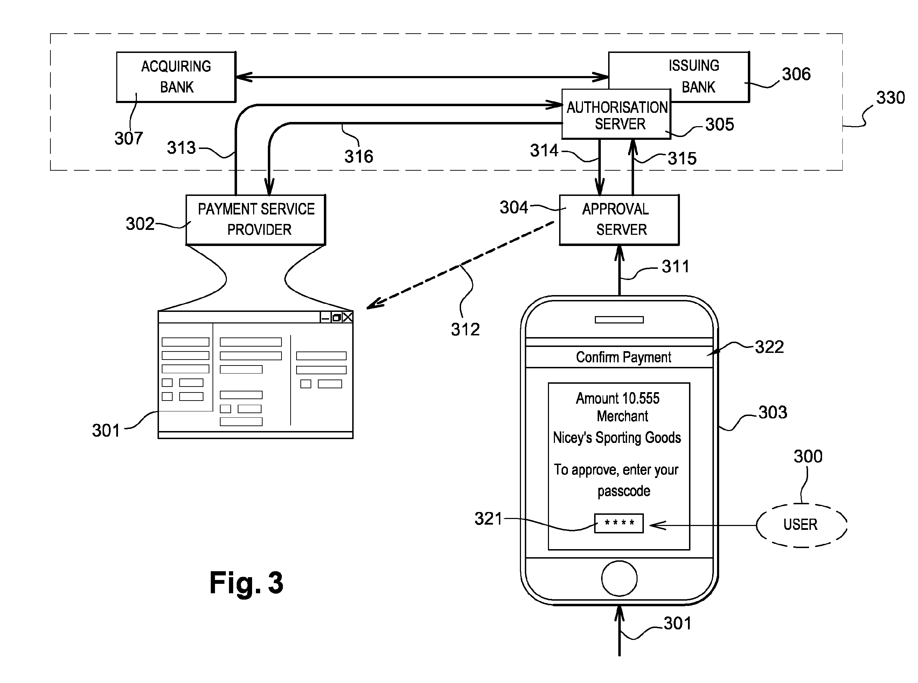

Figure 3 gives an example of a system comprising an approval server according to the invention.

In this example, the user is invited by a payment application 301 to approve a requested transaction. For that purpose, at least one parameter representative of the requested transaction is uploaded towards a terminal 303 that will be used to approve the transaction. For example, this can be done automatically or by scanning a QR code (Quick Response code) displayed by the payment application or by entering manually in the terminal 303 the at least one parameter.

In this example, the terminal 303 is a smartphone on which is installed a client application allowing the approval of the requested transaction. One or several parameters representative of the transaction are displayed on the screen of the smartphone 303 allowing the user to check that the transaction he is about to approve is the one he has requested. In this example, two parameters are displayed, the amount of the transaction and an identifier of the merchant.

The approval is then performed by the user by entering a PIN code that has been previously attributed to or chosen by the user. As the PIN code is personal, it identifies the user. As already mentioned, alternative techniques such as fingerprint or iris identification can be used to identify the user and approve the transaction.

Once the PIN code has been entered, the generation of the electronic signature is triggered. This signature is generated by using a signing algorithm implemented by the client application 322 or by a secure element embedded in the terminal 303 and operated from the client application 322. If a secure element is used, the electronic signature can be of ARQC type (Authorisation ReQuest Cryptogram).

The signing algorithm uses a set of parameters representative of the transaction as input parameters. These are corresponding for example to the two parameters displayed on the smartphone 303.

The signed request is then sent 311 to the approval server 304, for example using a 2G, 3G or 4G network. In this embodiment, the signed request is composed of the electronic signature and of the two parameters representative of the transaction which have been displayed on the smartphone 303 at the time of the approval. An identifier of the user is also transmitted in the signed request.

The approval server 304 is in charge of verifying the electronic signature transmitted with the signed request. The verification of the electronic signature can be performed by recalculating the electronic signature once the signed request has been received by the approval server and by comparing the received electronic signature to the recalculated one. The received electronic signature is considered as positively verified when these two versions of the electronic signature are matching, that is to say when the two signatures are identical.

According to one aspect of the invention, the result of the aforementioned signature verification is valid for a predefined period of time.

In one embodiment, the approval server 304 sends 312 the payment credentials required by the payment service provider 302. The payment credentials may be, for example, a primary account number (PAN), expiry date and a card verification value (CVV). For that purpose, the approval server 304 may comprise a memory configured to store a plurality of payment credentials. The memorized payment credentials are associated with the different identifiers of the users. It allows recovering the appropriate payment credentials once the electronic signature has been positively verified. Advantageously, the user does not have to enter or to provide by himself its payment credentials. This makes the procedure simpler and more secure as the payment credentials may be transferred securely 312 to the payment service provider once the requested transaction has been approved.

In an alternative embodiment, the payment credentials may be entered by the user himself via the payment application 301.

Then, the payment service provider 302 sends a payment authorisation request 313 comprising the payment credentials to an authorization server 305. This authorisation server 305 sends a consultation request 314 to the approval server 304 to know if said transaction has been approved by the genuine user, that is to say if the electronic signature has been positively verified.

The consultation request 314 comprises the payment credentials used for the payment transaction and may also comprise a set of parameters representative of the requested transaction. Then, the approval server 304 verifies that the electronic signature emitted for this transaction has been positively verified and that this verification is still valid. It can also verify that the parameters representative of the transaction and transmitted with the confirmation request 314 correspond to those transmitted with the signed request 311 and memorized in the approval server 304.

The approval server 304 sends back the result of this or these verification in a consultation response 315 to the authorisation server 305 and the authorisation server 305 may use said result together with its other risk management methods to process the payment request.

A message 316 informing that the transaction is accepted or declined is transmitted by the authorisation server 305 to the payment service provider.

Advantageously, this invention could avoid integration at the level of the merchant or the payment service provider. More precisely, the invention is mainly implemented by an approval server thus greatly simplifying deployment aspects.

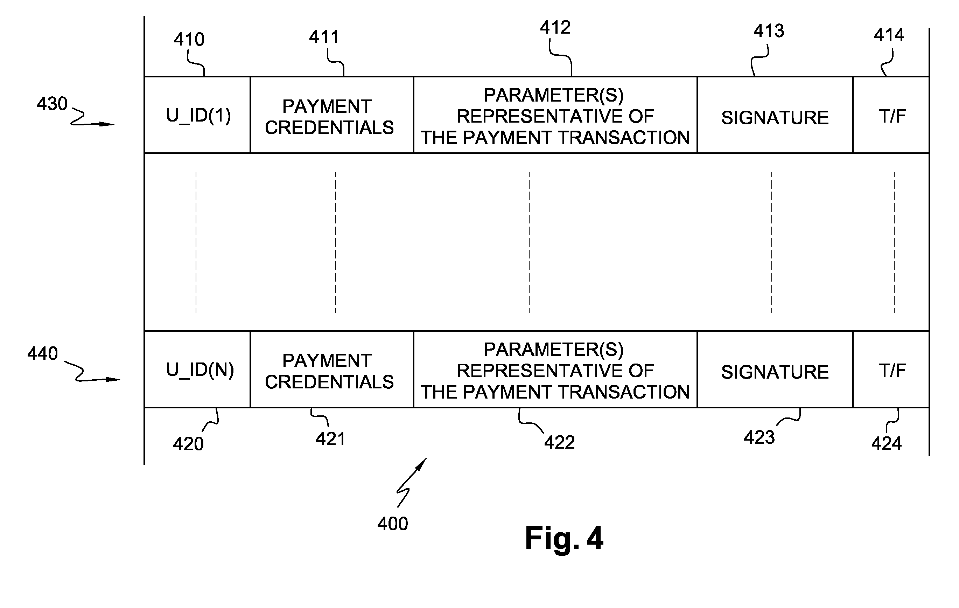

Figure 4 provides the example of a memory area than can be monitored by an approval server according to the invention.

In this example, the memory area 400 comprises a plurality of data clusters 430, 440, a cluster being attributed to a given user. For example, U_ID(1) is the identifier of a first user and U_ID(N) is the identifier of a N-th user. The identifier can be for example a MSISDM (Mobile Station International Subscriber Directory Number), that is to say a mobile phone number.

Each data cluster may also comprise one or several payment credentials 411, 421. These memorized payment credentials can be retrieved by the approval server following the reception a signed request as such a request comprises the identifier of the user approving the transaction. Therefore, the correspondence between the approving user and the memorized payment credentials can be easily performed. The memorized payment credentials can be transmitted 312 to a payment service provider 302 once a given transaction has been approved by the user. Additionally, they can be used at the time of preparing a response 315 to an authorization request 314 for checking that a requested transaction associated to theses payment credentials has been approved by the user.

In one embodiment, the signature generated by the client application is stored 413, 423 in the clusters 430, 440 of the memory area 400 as it may constitute a verifiable proof that the user approved and conducted a given transaction.

A data cluster may also comprise a field 414, 424 in which the result of the signature verification is memorized.

Further, if an internet payment window IPW mechanism is used, a cluster may also comprise a field (not represented) in which the time at which the IPW has been opened and a field indicating its duration.

The parameters representative of a requested payment transaction may also be stored 412, 422 in the memory area 400. This can be particularly useful at the time of verifying the signature, for example when a recalculated version of the signature is used for that purpose. This can also be useful when the approval server receives an authorization request 314 including one or several parameters representative of the requested transaction as it can be checked that the parameters received in the authorization request 314 are matching with those memorized 412, 422 by the approval server 304 for a given transaction.

## Claims

1. A method for ensuring that a genuine user (300) has approved a payment transaction to be processed by a payment network (330), the method comprising the steps of:
- receiving (200, 311) a signed request comprising a set of at least one parameter representative of the payment transaction and an electronic signature, said electronic signature being generated by a client application (322) by applying a signing algorithm to the said at least one parameter following approval of the payment transaction by the user identified by said client application (322);
- verifying (201) that the received electronic signature has been generated by the genuine user (300);
- receiving (202) a consultation request (314) emitted by the payment network (330) requesting to check if the payment transaction has been approved by the genuine user (300);
- sending (203) a consultation response (315) to the payment network (330) indicating the result of the electronic signature verification.

2. A method according to claim 1, wherein the client application (322) is executed on a first device (303) distinct from a second device on which a payment application (301) proposing the transaction to the user is executed.

3. A method according to any of the preceding claims, wherein an internet payment window is opened, said window corresponding to predefined time duration during which the result of the signature verification is valid.

4. A method according to any of the preceding claims, wherein the payment transaction is approved by the user by providing a PIN code to the client application (322).

5. A method according to any of the preceding claims, wherein an amount of the payment transaction is used as one parameter representative of the payment transaction.

6. A method according to any of the preceding claims, wherein an identifier of a merchant proposing the transaction is used as one parameter representative of the payment transaction.

7. A method according to any of the preceding claims, wherein the signing algorithm is chosen among: RSA, DSA SHA-1, SHA-256, SHA-512 or MD5 algorithms.

8. A method according to any of the preceding claims, wherein the verification of the electronic signature is performed by recalculating the electronic signature once the signed request has been received by the approval server, by comparing the received electronic signature to the recalculated one, the received electronic signature being considered positively when these versions are matching.

9. An approval server (304) for ensuring that a genuine user (300) has approved a payment transaction to be processed by a payment network (330), comprising:
- a module configured to receive (311) a signed request comprising a set of at least one parameter representative of the payment transaction and an electronic signature, said electronic signature being generated by a client application (303) by applying a signing algorithm to the said at least one parameter following approval of the payment transaction by the user identified by said client application (322);
- a module configured to verify that the received electronic signature has been generated by the genuine user (300);
- a module configured to receive a consultation request (314) emitted by the payment network (330) requesting to check if the payment transaction has been approved by the genuine user (300);
- a module configured to send a consultation response (315) the payment network (330) indicating the result of the electronic signature verification.

10. An approval server (304) according to claim 11, wherein the signed request comprises an identifier of the user.

11. An approval server (304) according to claim 10 or 11, comprising a memory (400) configured to store the results (414, 424) of the verification of the electronic signature.

12. An approval server (304) according to any of the claims 10 to 12, comprising a memory (400) configured to store a plurality of electronic signatures, an electronic signature being associated to a given payment transaction, said electronic signatures being maintained in memory (400) to be used after completion of the transaction as a proof that the genuine user approved the transaction.

13. An approval server (304) according to claim 12, comprising a memory (400) configured to store at least a payment credential associated to the identifier of the user (300), said payment credential being transmitted to a payment service provider (302) once the electronic signature has been authenticated.
